Europäisches Patentamt

(19) European Patent Office

Office européen des brevets

(11) Publication number: **0 161 362**
**B1**

(12) **EUROPEAN PATENT SPECIFICATION**

(45) Date of publication of patent specification: **11.05.88**

(51) Int. Cl.⁴: **F 16 J 9/26**

(21) Application number: **84307531.8**

(22) Date of filing: **01.11.84**

(54) Seal assembly.

(30) Priority: **23.04.84 US 603147**

(43) Date of publication of application:
**21.11.85 Bulletin 85/47**

(45) Publication of the grant of the patent:
**11.05.88 Bulletin 88/19**

(84) Designated Contracting States:
**BE DE FR GB IT LU NL SE**

(56) References cited:
**DE-A-2 255 951**
**FR-A-2 429 949**
**US-A-2 368 380**
**US-A-3 449 021**

(73) Proprietor: **MICRODOT INC.**
**23 Old Kings Highway South**
**Darien Connecticut 06820 (US)**

(72) Inventor: **Repella, James Ambrose**
**2574 Ellwood**
**Berkley Michigan 48072 (US)**

(74) Representative: **Williams, Trevor John et al**
**J.A. KEMP & CO. 14 South Square Gray's Inn**
**London WC1R 5EU (GB)**

Courier Press, Leamington Spa, England.

## Description

Piston or rod seals are often subject to a design requirement that materially reduces life expectancy of the seal, namely, that the seal reciprocate over a port that permits radial extrusion of the seal element into the port with resultant tearing or abrasion of the seal. This problem has heretofore been solved by fabricating the seal element from relatively hard, non-extrudable material. However, since such materials are relatively inelastic, such known seals must be split to accommodate the radial expansion necessary for assembly on the piston. Obviously, splitting of the seal element induces leakage thereof.

The present invention relates to a seal assembly suitable for use on a piston or rod that is reciprocable over ports or the like. The entire periphery of a seal element of the seal assembly maintains uninterrupted sealing contact with the cylinder or rod to ensure sealing. The seal is expandable radially to accommodate assembly.

US—A—2 368 380 discloses a seal assembly in accordance with the prior art portion of claim 1. This prior seal assembly uses integral non-undulating portions of a casing on opposite axial sides of the seal element in a seal assembly suitable for sealing about a shaft and as compared therewith the present invention is specifically of advantage in withstanding the stresses and wear which will affect a piston seal ring and is characterised as specified in the characterising portion of claim 1. The undulating edges of the support members complementary with the undulations of the seal member provide good support to stabilise the seal element against axial distortion in the piston groove upon reciprocation of the piston such that the seal element passes over ports and the like the flow through which is controlled by the piston.

The invention will be further described, by way of example, with reference to the accompanying drawings, wherein:

Figure 1 is a fragmentary cross sectional view through a seal assembly embodying the present invention where mounted on a piston;

Figure 2 is a view taken in the direction of the arrow of Figure 1;

Figure 3 is a view, similar to Figure 2, of a modified form of the seal;

Figure 4 is a view similar to Figure 3, showing another embodiment of the invention; and

Figure 5 is a view, similar to Figure 2, showing stacked seal elements.

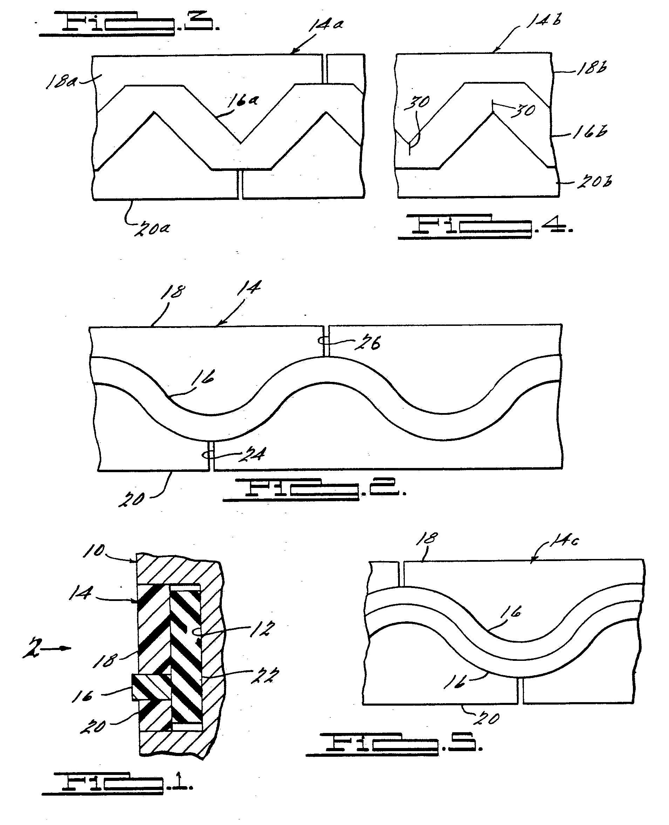

As shown in Figure 1, a piston 10 has a circumferential groove 12 therein for the acceptance of a seal assembly 14. The seal assembly 14 comprises a seal element 16, a pair of support elements 18 and 20 an an expander ring 22. The seal element 16 and support elements 18 and 20 are made from relatively hard inelastic material, for example, reinforced nylon. Expander ring 22 is made from resilient material, for example, nitrile rubber.

As best seen in Figure 2, the seal element 16 is of serpentine configuration defined by a plurality of circumferentially spaced undulations. The support rings 18 and 20 have undulations on axially inner edges complementary to those of the seal element 16 so as to accept the seal element 16 in nesting relationship. The axially outer edges of the support rings 18 and 20 are straight so to be positively positionable against juxtaposed edges of the groove 12 of the piston 10.

It is to be noted that the support elements 18 and 20 have splits 26 and 24 therein, respectively, to facilitate radial expansion and assembly within the groove 12 in the piston 10.

The undulations of the seal element 16 permit a slight circumferential expansion thereof so that the seal element can be assembled over the piston 10 without requiring to be slit to accommodate such expansion.

As seen in Figure 3, a seal assembly 14a comprises a seal element 16a and a pair of support elements 18a and 20a. Th seal element 16a and support elements 18a and 20a are made from relatively hard material, for example reinforced nylon. The seal element 16a, like the element 16, is of generally serpentine configuration but is distinguishable therefrom by a plurality of circumferentially spaced straight sided undulations. The support rings 18a and 20a have undulations complementary to those of the seal element 16a so as to accept the seal element 16a in nesting relationship.

As seen in Fig. 4, the seal assembly 14b comprises a seal element 16b and a pair of support elements 18b and 20b. The seal element 16b is of serpentine configuration similar to the seal element 16a but has splits 30 therein to facilitate radial expansion and assembly within the groove 12 in the piston 10.

As seen in Fig. 5, the seal assembly 14c comprises a pair of seal elements 16 and a pair of support elements 18 and 20. The additional seal element 16 is nested with the support elements 18 and 20 and provides additional sealing power to the assembly 14c.

## Claims

1. A seal assembly for receipt in a groove of a member to be sealed comprising an annular seal element (16) of relatively hard inelastic material having undulating axially facing parallel edge portions to facilitate circumferential expansion thereof during assembly about a member (10) to be sealed, said seal element having right circular cylindrical radially inner and outer faces and the seal assembly includes portions (18, 20) on opposite sides of the seal element to provide support in an axial direction, characterized in that the seal assembly is adapted to fit in a groove about a circular piston (10) and includes as said portions a pair of support elements (18, 20) having axially facing undulating edge portions complementary to the undulations of said seal element for assembly therewith in nesting relationship, said support elements having straight edge portions engageable with opposite juxtaposed edges of the groove (12) in said piston.

2. A seal assembly in accordance with claim 1, characterised by a resilient expander ring (22) disposed radially inwardly of said seal element (16) and support elements (18, 20).

3. A seal assembly in accordance with claim 1 or 2, characterised in that said undulations are smoothly curved.

4. A seal assembly in accordance with claim 1 or 2, characterised in that said undulations have straight sides defining a herringbone configuration.

5. A seal assembly in accordance with claim 1, 2 or 4, characterised in that said undulations are partially split (at 30) in the longitudinal direction at their axial extremities to facilitate radial expansion.

6. A seal assembly in accordance with claim 1 or 2, characterised in that a plurality of said seal elements (16) are stacked in nesting relationship.

7. A seal assembly in accordance with any previous claim, characterised in that the or each said seal element (16) is of larger diameter than said support elements (18, 20).

## Patentansprüche

1. Dichtung aus einem ringförmigen Dichtungselement (16) aus relativ hartem unelastischem Material als Einlage in eine Vertiefung des abzudichtenden Elements mit gewellten axial gegenüberliegenden parallelen Kanten zur Ermöglichung der Ausdehnung in Umfangsrichtung um ein Bauteil (10), wobei das Dichtungselement innere und äußere zylindrische Flächen aufweist und die Dichtung Bauteile (18, 20) an den gegenüberliegenden Seiten des Dichtungselements umfaßt für die Halterung in axialer Richtung, dadurch gekennzeichnet, daß die Dichtung in eine Vertiefung um einen runden Kolben (10) paßt und die Bauteile (18, 20) zwei Tragelemente sind, welche axial zueinander gekehrte gewellte Kanten — komplementär zu denen des Dichtungselements beim Eingriff und gerade Kantenbereiche, die einzugreifen vermögen in die darüberliegenden Kanten der Ausnehmung (12) des Kolbens, aufweisen.

2. Dichtung nach Anspruch 1, dadurch gekennzeichnet, daß ein nachgiebiger Dehnungsring (22) radial innerhalb des Dichtungselements (16) und der Bauteile (18, 20) angeordnet ist.

3. Dichtung nach Anspruch 1 oder 2, dadurch gekennzeichnet, daß die Wellungen glatt gekrümmt sind.

4. Dichtung nach Anspruch 1 oder 2, dadurch gekennzeichnet, daß die Wellungen gerade Seiten, die eine Pfeil-Konfiguration begrenzen, aufweisen.

5. Dichtung nach Anspruch 1, 2 oder 4, dadurch gekennzeichnet, daß die Wellungen teilweise in Längsrichtung an ihren axialen Enden zur Erleichterung der Radialdehnung geteilt sind (bei 30).

6. Dichtung nach Anspruch 1 oder 2, dadurch gekennzeichnet, daß eine Vielzahl von Dichtungselementen (16) dicht zueinander angeordnet sind.

7. Dichtung nach einem der vorhergehenden Ansprüche, dadurch gekennzeichnet, daß das oder die Dichtungselement(e) (16) einen größeren Durchmesser als die Bauteile (18, 20) besitzt (besitzen).

## Revendications

1. Montage de garniture d'étanchéité prévu pour être logé dans une rainure d'un élément dont l'étanchéité doit être assurée, comprenant un élément annulaire (16) formant garniture d'étanchéité, constitué d'une matière non élastique et relativement dure, comportant des parties ondulées à bords parallèles se faisant face axialement afin de faciliter son extension circonférentielle pendant le montage autour d'un élément (10) dont l'étanchéité doit être assurée, cet élément formant garniture d'étanchéité comportant des faces circulaires cylindriques droites radialement intérieure et extérieure, et le montage de garniture d'étanchéité comprenant des parties (18, 20) de part et d'autre de l'élément formant garniture d'étanchéité afin d'assurer un support dans le sens axial, caractérisé en ce que le montage de garniture d'étanchéité est prévu pour s'emboîter dans une rainure autour d'un piston circulaire (10) et comprend pour constituer lesdites parties une paire d'éléments (18, 20) de support dont les bords ondulés se faisant face axialement sont complémentaires des ondulations de l'élément formant garniture d'étanchéité pour le montage de celui-ci par emboîtement, ces éléments de support comportant des bords droits qui peuvent être positionnés contre les bords juxtaposés opposés de la rainure (12) du piston.

2. Montage de garniture d'étanchéité suivant la revendication 1, caractérisé par une bague élastique (22) d'extension disposée radialement à l'intérieur de l'élément (16) formant garniture d'étanchéité et des éléments (18, 20) de support.

3. Montage de garniture d'étanchéité suivant les revendications 1 ou 2, caractérisé en ce que les ondulations sont régulièrement incurvées.

4. Montage de garniture d'étanchéité suivant les revendications 1 ou 2, caractérisé en ce que les ondulations présentent des faces droites déterminan une configuration à chevrons.

5. Montage de garniture d'étanchéité suivant les revendications 1, 2 ou 4, caractérisé en ce que les ondulations sont partiellement fendues (en 30) dans le sens longitudinal à leurs extrémités axiales afin de faciliter l'extension radiale.

6. Montage de garniture d'étanchéité suivant les revendications 1 ou 2, caractérisé en ce qu'une pluralité de ces éléments (16) formant garniture d'étanchéité sont empilés en eboîtement.

7. Montage de garniture d'étanchéité suivant l'une quelconque des revendications précédentes, caractérisé en ce que le ou chaque élément (16) formant garniture d'étanchéité a un diamètre supérieur à celui des éléments (18, 20) de support.

0 161 362

FIG.3.

FIG.4.

FIG.2.

FIG.1.

FIG.5.

1